Europäisches Patentamt

European Patent Office

Office européen des brevets

(11) Publication number: **0 484 928 A2**

# EUROPEAN PATENT APPLICATION

(21) Application number: **91118944.7**

(22) Date of filing: **06.11.91**

(51) Int. Cl.5: **G06F 15/72**

(30) Priority: **09.11.90 JP 304392/90**
**28.02.91 JP 34327/91**

(43) Date of publication of application:
**13.05.92 Bulletin 92/20**

(84) Designated Contracting States:
**DE FR**

(71) Applicant: **MITSUBISHI DENKI KABUSHIKI KAISHA**
**2-3, Marunouchi 2-chome Chiyoda-ku Tokyo 100(JP)**

(72) Inventor: **Tanaka, Yutaka, c/o Mitsubishi Denki K.K.**
**Nagoya Works, 1-14, Yadaminami 5-chome Higashi-ku, Nagoya-shi, Aichi(JP)**
Inventor: **Yamaguchi, Naoto, c/o Mitsubishi Denki**
**Mekatoronikusu Sofutouea K.K., 1-14, Yadaminami**
**5-chome, Higashi-ku, Nagoya-shi, Aichi(JP)**

(74) Representative: **Popp, Eugen, Dr. et al**
**MEISSNER, BOLTE & PARTNER**
**Widenmayerstrasse 48 Postfach 86 06 24**
**W-8000 München 86(DE)**

(54) CAD unit with automatic dimensional transformation.

(57) A CAD unit apparatus and method therefor in which nominal dimensional values with tolerances are automatically converted to medium-tolerance values, wherein the positive and negative tolerance values are equal in magnitude. The dimensional values known for one or more views, including medium-tolerance values, are used to generate unknown values. The automatic transformation occurs on a per-view basis. The transformed views are displayed and the changed and unchanged areas can be displayed with distinguishing characteristics.

Fig. 1

EP 0 484 928 A2

## BACKGROUND OF THE INVENTION

### Field of the Invention

The present invention relates to a CAD unit for assisting the design and machining of dies used as molds in the production of multiple identical plastic parts, or the like.

### Description of the Background Art

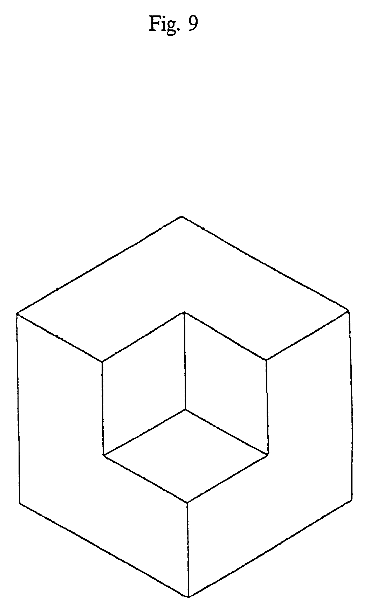

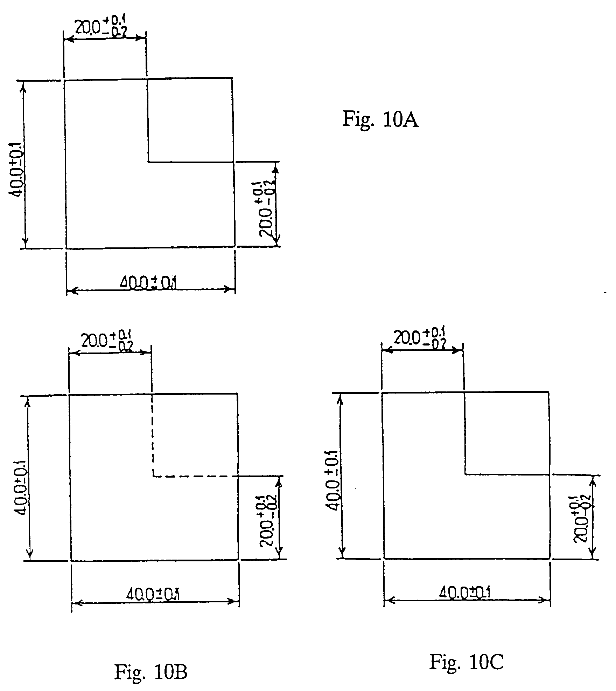

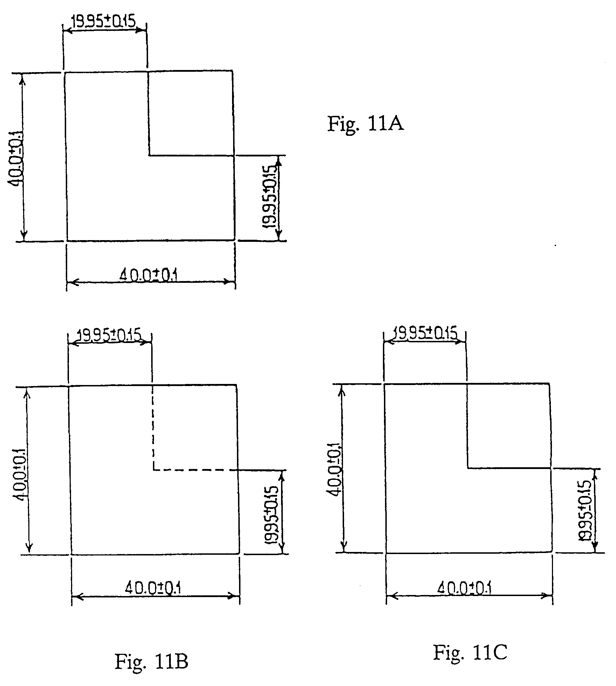

When a product, shaped as shown in Fig. 9, is to be produced by the mechanical constraint of a mold die on a raw material, such as a granular or formable material which is cured or hardened into a desired form, a properly dimensioned mold first must be made. Generally, in creating the design of a mold die, a first three-view drawing of the product shape, as shown in Figs. 10A-10C, is initially produced. This first three-view drawing of the product shape includes tolerance values which often are not identical in the positive and negative directions, as seen in the Figure. Then, in order to create a drawing illustrating the dimensions of an actual die, the original nominal dimension values together with the original tolerances in the product drawing are changed into new nominal dimension values with new tolerances, where the positive and negative tolerances are identical (hereinafter referred to as the "medium-tolerance dimensions"). The new dimensions may be represented in a second three-way drawing, as shown in Figs. 11A-11C. A sequence of steps for changing the product dimensions into medium-tolerance dimensions, as mentioned above, is referred to as a "medium-tolerance transformation operation". A typical procedure for converting a product dimension having a value with tolerances into a medium-tolerance dimension, having a new nominal dimension value and new single tolerance value, is as follows:

Example:

$$20.0 \pm {0.1 \atop 0.2}$$

19.95±0.15

New nominal dimension value
20.0 + (0.1-0.2)/2 = 19.95
New single tolerance value
(20.0÷0.1)-19.95 = 0.15

The operation to convert an original product dimension into a medium-tolerance dimension is performed to increase a probability that a die may be machined to a size that is within the tolerances of the originally specified product dimensions. This goal is best accomplished when the die is machined by using the new nominal dimension values obtained after the conversion of the product dimensions into the medium-tolerance dimensions. The conversion to medium-tolerance values allows the positive and negative tolerance values to be equal, unlike the tolerance values provided for the original dimensions of a product. The new nominal dimension value can be used effectively to guide, for example, the cutting operation of the machine.

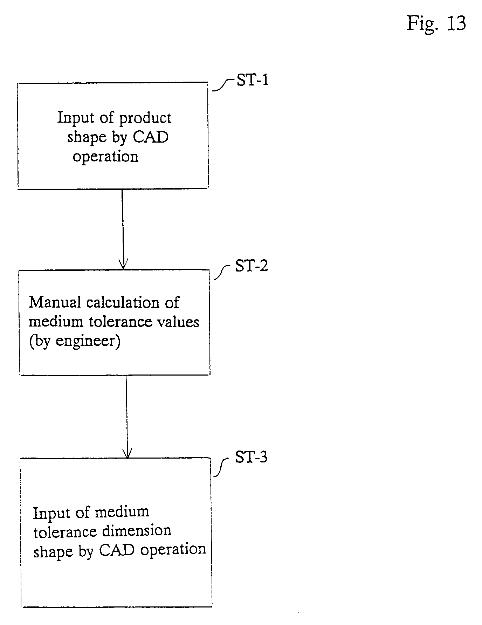

The conventional process for converting original product dimensions into medium-tolerance values for a die is operator intensive, as illustrated in Figure 13. Initially, in step ST-1, the data defining a product shape is input to a CAD system by a CAD system operator. Thereafter, an engineer or the operator is required to manually calculate the medium tolerance dimensions in step ST-2 for subsequent input into the CAD system by the CAD system operator in step ST-3. The shape and medium tolerance dimension values are used by the CAD system to create the instructions for the automatic production of a die mold by a numerical control (NC) machine.

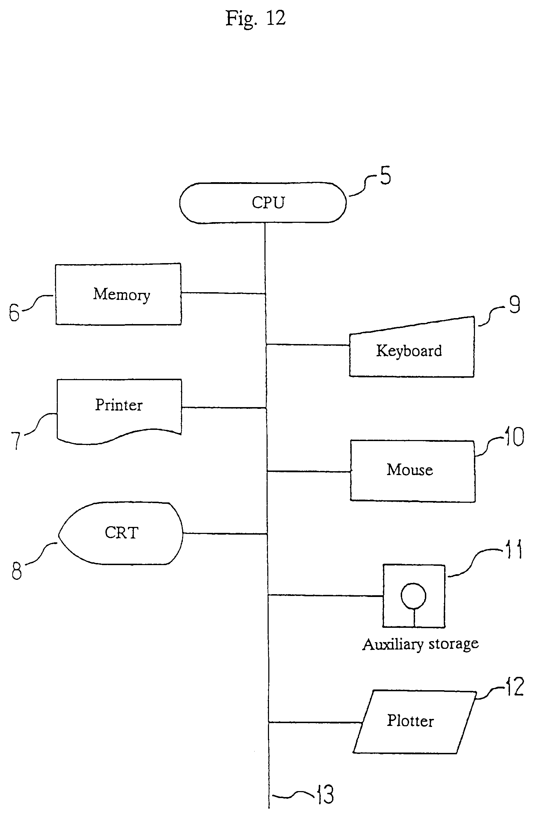

Fig. 12 illustrates a hardware configuration of a CAD unit known in the art, that may be used for the machining of a die mold. In the Figure, a CPU 5 is used for creating NC data by creating shape data, transforming defined data, analyzing machining conditions according to a variety of input data and controlling the output, including display, of messages, data and NC command instructions. A memory 6 for storing input data, program instructions, *etc.*, a CRT 8 for displaying a variety of information relating to defined data, machining path, machining conditions, input request messages, *etc.*, on its screen, a keyboard 9 for entering the shape data, machining conditions, *etc.*, a mouse 10 for selecting any of the graphic forms and menu items displayed on the CRT 8, an auxiliary storage 11 for storing defined data, *etc.*, and a plotter 12 for outputting a created product drawing on paper, all form a part of the system and are used in a conventional manner. All of the above mentioned components 5 to 12 are connected to each other via a bus 13.

The known CAD unit configured as described above requires substantial engineer and/or operator analysis time because the original drawing data must be analyzed, converted manually to medium-tolerance dimensions and entered in order to allow a drawing having medium-tolerance dimensions to be created.

In addition, time is required to check a created drawing having medium-tolerance dimensions displayed on the CRT 8 because there is no convenient way to distinguish features whose dimensions have been changed from those features whose dimensions have not yet been changed.

Further, all dimensional lines must be drawn for each view, as shown in Fig. 10, because the medium-tolerance transformation operation is performed for multi-view drawings on a view basis, in sequence. Hence, time and labor are required to calculate and draw all of the dimensional lines in every view and there will be a higher probability that a wrong dimensional tolerance may be entered in any one of the single-view drawings.

It is, accordingly, an object of the present invention to provide a CAD unit which automatically transforms original drawing data into data having medium-tolerance dimensional values and tolerance values.

It is a further object of the present invention to provide a CAD unit which does not require drawing data to be analyzed repeatedly, once for each of several views, after a drawing having medium-tolerance dimensions for a first view has been created.

It is another object to provide a CAD unit which allows a drawing to be displayed so that areas remaining unchanged and areas having been changed may be identified at a glance.

It is a further object to provide a CAD unit which allows a multi-view drawing having exact medium-tolerance dimensions to be created in a short time with only the entry of a minimum of nominal dimensions.

## SUMMARY OF THE INVENTION

These and other objects of the present invention are achieved by a method and apparatus for processing at least the original dimensional values and nominal tolerance values for a workpiece and for automatically generating corresponding medium tolerance values.

In particular, where a multi-view representation of a workpiece is generated in a CAD system, a single view at a time may be selected and the original dimensional values with nominal tolerances therein converted to medium tolerance values. Data relating to the geometric shape of the workpiece also may be used to analyze the original data and generate new dimensional values, including medium tolerance values, applicable to each view. Where dimensional data, including tolerance values, is not included for all lines in a view, access to a calculation of such data from values in all views may be obtained. Further, since the changed areas are already known, by input or calculation, the unchanged and changed areas may be identified in a display of a view.

## BRIEF DESCRIPTION OF THE DRAWINGS

Fig. 1 is a block configuration diagram of the unit comprising a first embodiment of the invention.

Fig. 2 is a flowchart illustrating the operation of automatic medium-tolerance dimension shape generating means used in the first embodiment of the invention.

Fig. 3 is a block configuration diagram illustrating a CAD unit concerned with a second embodiment of the present invention.

Fig. 4 is a flowchart illustrating the operation of the CAD unit concerned with the second embodiment of the present invention shown in Fig. 3.

Fig. 5 is a block configuration diagram illustrating a CAD unit concerned with a third embodiment of the present invention.

Fig. 6 is a flowchart illustrating the operation of the CAD unit concerned with the third embodiment of the present invention shown in Fig. 5.

Figs. 7A-7C show a product shape entered by a shape defining unit concerned with the third embodiment of the present invention shown in Fig. 5.

Figs. 8A-8C are three-view drawings of the product shape changed into medium-tolerance dimensions concerned with the third embodiment of the present invention illustrated in Fig. 5.

Fig. 9 is a perspective view of a product shape.

Figs. 10A-10C show a product shape entered by the shape defining means.

Figs. 11A-11C are three-view drawings of the product shape changed into medium-tolerance dimensions.

Fig. 12 is a hardware configuration diagram of a CAD unit known in the art.

Fig. 13 is an operational flow chart for the medium-value dimension inputting process known in the art.

Fig. 14 is a simple illustration of one view of an object with lines defined by point locations and magnitudes.

## DESCRIPTION OF THE PREFERRED EMBODIMENTS

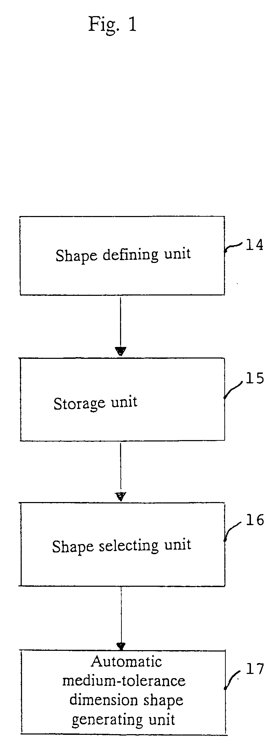

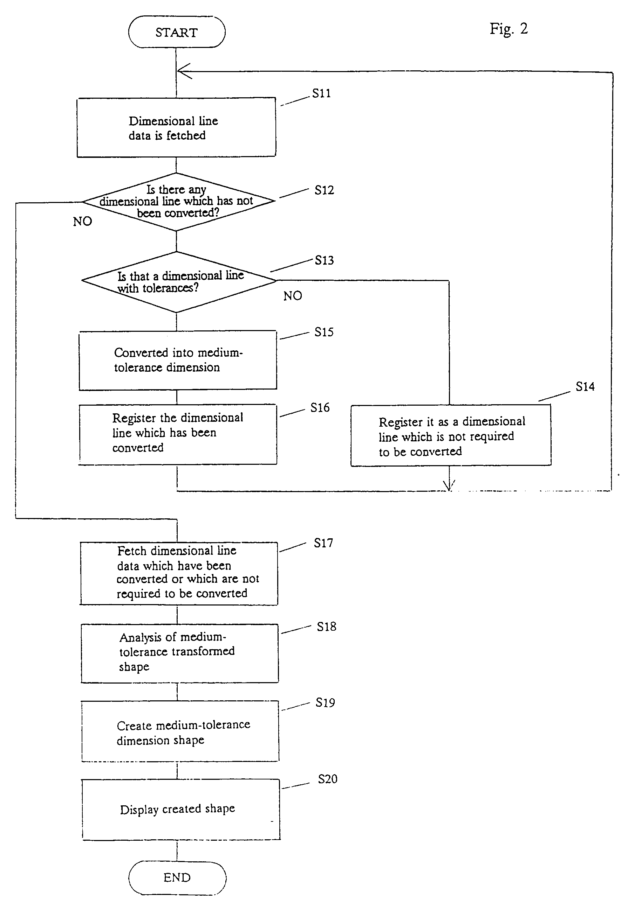

The first embodiment of the invention concerns an automatic procedure for creating a product shape, as shown in Fig. 9 and as represented by the three-view drawing shown in Figs. 10A-10C using the known CAD unit and, in particular, for converting the created three-view drawing into a three-view drawing subjected to the medium-tolerance transformation operation, as shown in Figs. 11A-11C. This embodiment may be described with reference to the functional block diagram in Fig. 1, the flowchart in Fig. 2 and the general hardware configuration of a CAD unit seen in Fig. 12.

First, various data on the product shape shown in Fig. 9 is entered into memory 6 by a shape defining unit 14 in Fig. 1 from the keyboard 9 and/or the mouse 10 using various drawing input functions of the CAD unit. The shape defining unit may be a conventional software package utilized by CPU 5. As a result, the input data is transmitted to the CPU S via the bus 13, appropriate processing is performed according to the combination of the input data, and a variety of drawing data such as shape or graphic element data, *e.g.* points, lines and circles, and dimensional line data, are created and displayed on the CRT 8. The created data is stored sequentially in the memory 6, *i.e.*, a storage unit 15, as seen in Figure 1. While simultaneously checking the data displayed on the CRT 8 to see that the input data is correct, an operator repeats the procedure and creates the three-view drawing having dimensional lines with tolerances as shown in Figs. 10A-10C.

In the first embodiment of the invention, one view of the created three-view drawing is then specified by shape selecting unit 16, based on the operator's use of the mouse 10. Again, the unit 16 may be a software program run by CPU 5. The specified view is converted into a corresponding view from among the three-view drawings shown in Figs. 11A-11C by automatic medium-tolerance dimension shape generating unit 17. The converted view may be displayed with medium-value dimensions and, thereafter, the same procedure followed for each of the remaining views or, as later described, the entire shape may then be automatically determined in medium-view dimensions.

As shown in the flowchart of Fig. 2, the automatic medium-tolerance dimension shape generating unit 17 analyzes the drawing data for the single-view drawing selected by the shape selecting unit 16. For each line in the selected view, the unit 17 fetches the original nominal dimensional values with original tolerance values from the storage 15 in sequence at step S-11. At step S-12, a determination is made as to whether or not there are any dimensional lines that have not been fetched. If the answer is YES, at step S-13, a further determination is made as to whether the fetched dimensional line has tolerances associated therewith. If the determination made is that the line has no tolerances, the line is registered at step S-14 as a dimensional line which is not required to be converted and the program returns to step S-11. If the determination at step S-13 is that the fetched dimensional line has tolerances, the original line dimensions are converted into medium-tolerance dimensions at step S-15. Then, at step S-16, the converted dimensional line is registered and the program returns to step S-11 for a fetching of dimensional line data. The steps S-11 through S-16 are repeated until it is judged at step S-12 that there are no further lines having original dimensional values with tolerance values.

After all dimensional lines have been converted, the program proceeds to step S-17 where the dimensional line data that has been converted and the data for which conversion is not required all are fetched. The automatic medium-tolerance dimension shape generating unit 17 receives the fetched data and performs an analysis of the medium-transformed shape, at step S-18. Based on the analysis performed, the medium-tolerance dimension shape is created at step S-19 and the created shape is displayed on the CRT 8 at step S-20, in the form of a single-view drawing from one of Figures 11A-11C.

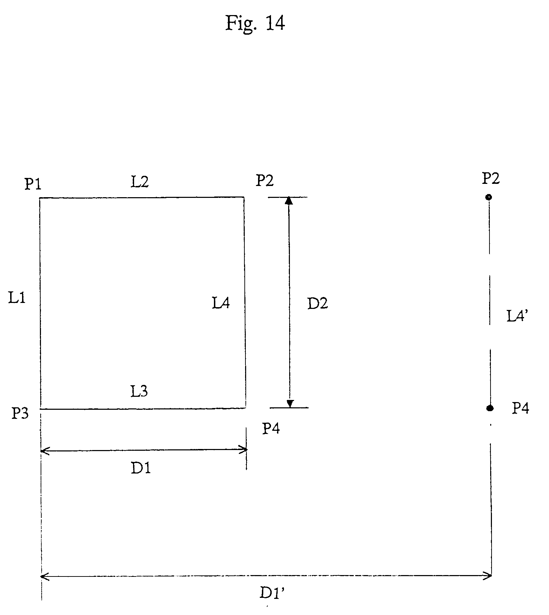

The word "analysis", as used herein, is intended to indicate, at least, that the spatial relationships among graphic elements (such as points, lines, circles) that are employed to define the content of the drawings and are connected to each other, as well as dimensional lines, will be established. Namely, since a change in certain graphic data for a predetermined graphic form necessarily forces other drawing data to be changed, so that the predetermined graphic form can be maintained, the relationship of the changed drawing data to the other data must be analyzed in order to properly relate all drawing data to each other. For example, referring to Figure 14, an illustration of a four-sided figure comprising lines L1-L4 defined by points P1-P4 and dimensions D1, D2 is presented. If line L3 is changed by increasing the value of D1 to D1', the values of all of the remaining parameters also will be changed if the shape is to remain the same. In particular, at least line L4 must be changed and new data defining the figure must be created. Clearly, the parameters for all interrelated dimensional parameters and possibly an entire shape can be changed on the basis of only a single change in a single line. The process of relating such specified change to the recomputation of the remaining parameters is such an "analysis".

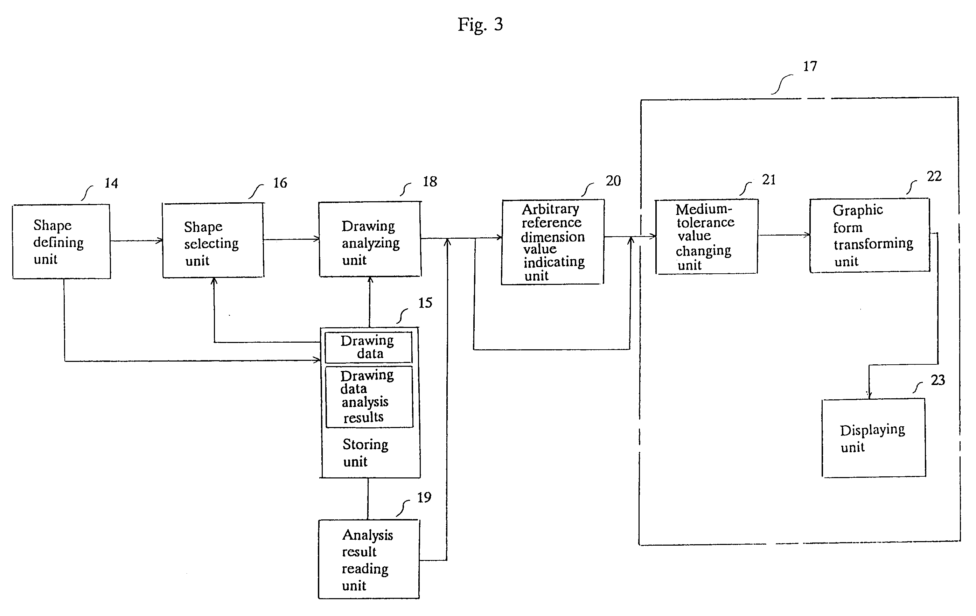

A second embodiment of the present invention may be described with reference to Figs. 3, 4, 10A-10C and 11A-11C. Fig. 3 is a block configuration diagram of a CAD unit concerned with the second embodiment of the present invention, wherein the numeral 14 indicates a shape defining unit, similar to the one in the first embodiment, for defining a graphic form as shown in Figs. 10A-10C in accordance with drawing data entered, *e.g.*, various graphic element data (points, lines, circles, *etc.*) and dimensional line data. Generally, the data is entered from the keyboard 9 and/or the mouse 10 and stored in storing unit 15. A shape selecting unit 16, similar to the unit in Fig. 1, is used for selecting a view, such as a top view or a side view which requires the graphic form to be transformed, from among the drawing data stored in the storing unit 15. A drawing analyzing unit 18 is for performing an "analysis" of the data of the particular view identified by the shape selecting unit 16. The analysis results from unit 18 are stored in the storage unit 15, in preparation for further analysis of the selected and other related views.

An analysis result reading unit 19 is used for reading the analysis results stored in unit 15. An arbitrary reference dimension value indicating unit 20 is available in the system for changing the tolerances of any particular dimensional line, that is identified by the operator using the shape selecting unit 16, according to a specified reference dimension value using the analysis results of the drawing. A medium-tolerance value changing unit 21 is used for changing the reference dimension values to make equal the positive and negative tolerances of all dimensional lines, other than the dimensional line for which the reference dimension value has been specified by the operator. A graphic form transforming unit 22 is used for moving and/or transforming graphic elements according to the changes made in all dimensional values, after the values in the selected view have been changed. A transformation result displaying unit 23 is operative for visually displaying the graphic elements and dimensional lines operated on by the graphic form transforming unit 22 in a manner such that portions which have been changed are displayed in different color from those remaining unchanged. The medium-tolerance value changing unit 21, graphic form transforming unit 22 and displaying unit 23 comprise the automatic medium-tolerance dimension shape generating unit 17. The hardware configuration is similar to that of the first embodiment, but the software is changed to implement the identified functions, in a manner known to one of ordinary skill in the art.

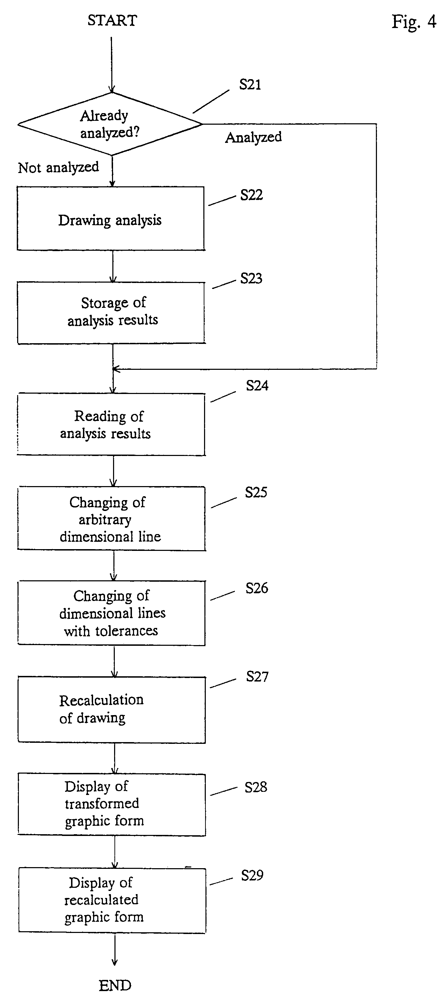

The operation of the above second embodiment will now be described with reference to the flowchart in Fig. 4. First, a determination is made at step S-21 as to whether the view selected for transformation by unit 16 already has been analyzed. If not, the relationships between graphic elements and dimensional lines in the drawing selected by the shape selecting unit 16 are analyzed by the drawing analyzing unit 18 at step S-22. Then, the analysis results are stored into the storage unit 15 at step S-23. Subsequently, the analysis results stored in storage unit 15 are fetched by the analysis result reader 19 at step S-24. When it has been judged, at step S-21, that the input drawing is one that already has been analyzed, the drawing analysis at step S-22 is not made, and the previous analysis results stored in unit 15 are fetched by the analysis result reader 19 at step S-24 for use as the analysis results of the input drawing.

A dimensional line for which a dimensional reference value is desired for use as a specified value is selected at step S-25, by the arbitrary reference dimension value indicating unit 20 from among those dimensional lines with tolerances, as entered in the input drawing. The specified value also is entered. For the dimensional line for which a reference dimensional value has been specified, its positive and negative tolerances are operated on and changed in accordance with the specified value. For the dimensional lines for which reference dimensional values have not been set, their reference dimension values and tolerance values are automatically changed by the medium-tolerance value changing unit 21, at step S-26, so that their positive and negative tolerances are made equal.

Then, three-view drawings with medium-tolerance dimensions, as shown in Figs. 10A-10C, are created. With the analysis results entered after all the values of the dimensional lines with tolerances have been changed, the graphic element/dimensional line data is operated on by the graphic form transforming unit 22 at step S-27 and the data is moved and/or transformed. The graphic data operated on is shown on the display (CRT) at step S-28, and the graphic elements and dimensional lines moved and/or transformed are displayed in different color (*e.g.*, red) form those in the original drawing at step S-29.

The operation (change) of the reference dimension values and tolerances at the steps S-25 and S-26 may be performed using a method identical to that practiced by the automatic medium-tolerance dimension shape generating unit 17 in the first embodiment. However, since the analysis results of the drawing data are stored in the storage unit 15 according to the present embodiment, the drawing data may not need to be analyzed several times in order to permit the drawing to be transformed several times, thereby increasing the processing speed.

In addition, the arbitrary reference dimension value indicating unit 20 allows the reference dimension value of any dimensional line to be specified by the operator.

Further, the drawing created can be checked easily because the drawing is displayed so that the areas remaining unchanged and the areas that have been changed are displayed with different characteristics, *e.g.*, color, and can be distinguished by an operator at a glance.

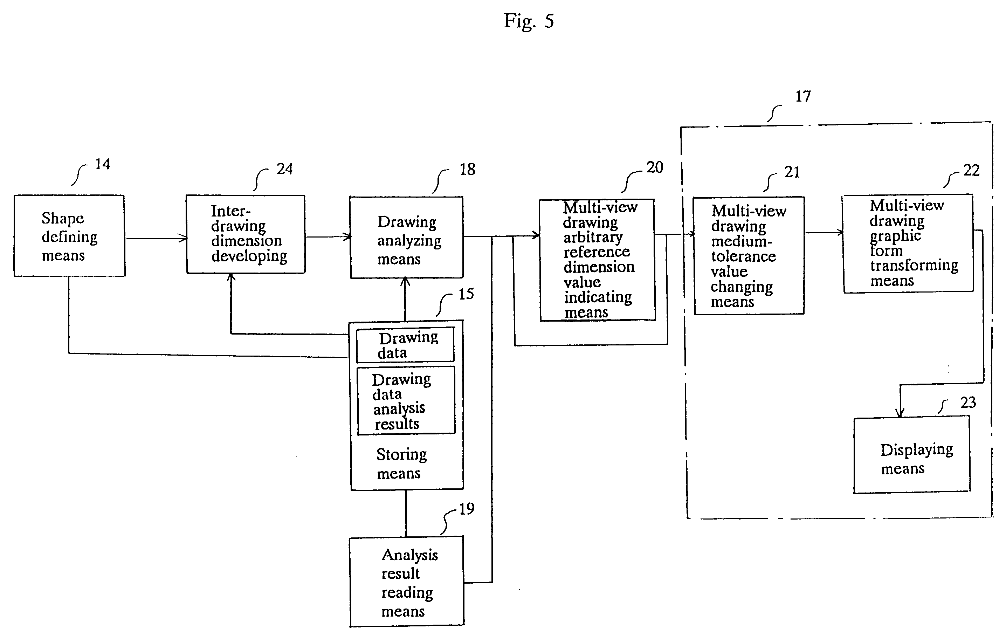

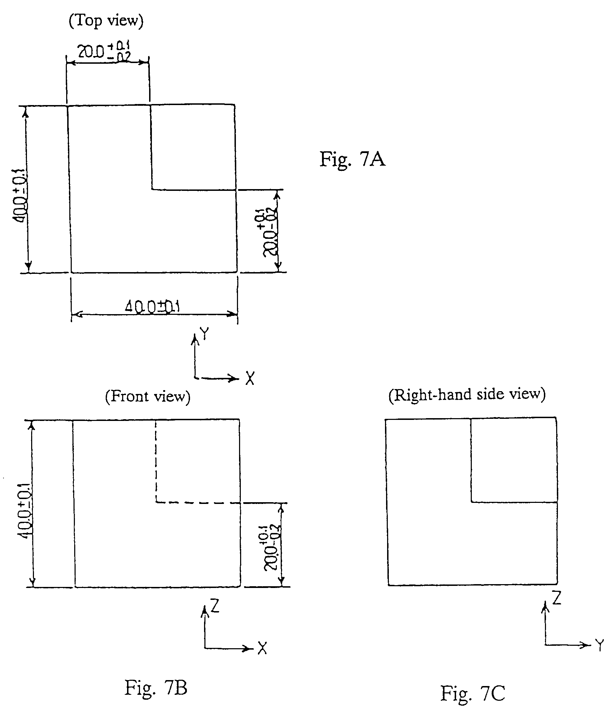

The third embodiment of the present invention will now be described using Figs. 5 to 9 and 10A-10C. Fig. 5 is a block diagram illustrating a further embodiment of the present invention, which creates three-view drawing data shown in Fig. 7A-7C, relative to the product shape shown in Fig. 9, by employing the shape defining unit 14 constructed in a similar manner to the shape defining unit in Fig. 1. The created three-view drawing data, such as graphic element data and dimensional line data, is stored in the storage unit 15. The dimension values for each single-view drawing of the input three-view drawing data are recognized by inter-drawing dimension developing unit 24, which cross-refers to the dimensional lines entered in the three single-view drawings. Namely, any dimension value that is omitted in a certain view in the drawing but can be identified by seeing another view is generated internally and stored in the storage unit 15. This capability allows the three-view drawing entered in a state shown in Figs. 7A-7C to be converted into a fully dimensioned three-view drawing format without having any dimensional lines omitted and to be displayed as shown in Figs. 10A-10C or used as a source of drawing data in the CAD unit.

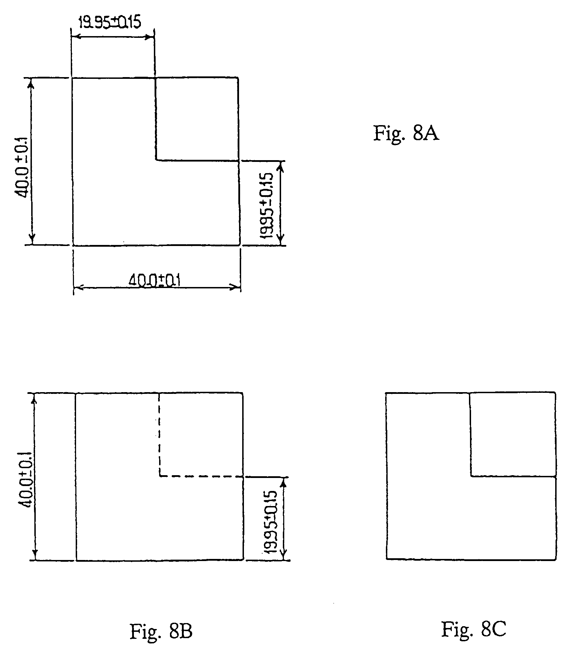

Also, dimensional lines with tolerances in the three-view drawing data, after being supplemented with omitted dimensional lines, may be converted into medium-tolerance dimensional lines by automatic multi-view drawing medium-tolerance dimension shape generating unit 17. Thereafter, the drawing data modified in accordance with the converted dimension values may be displayed on the display 23 as a three-view drawing shown in Figs. 8A-8C or 11A-11C.

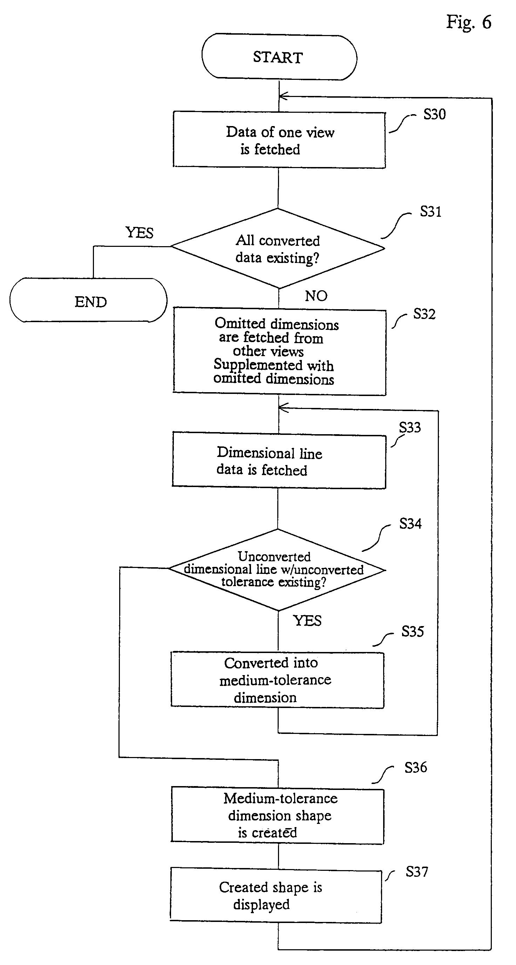

Among the operations of this third embodiment, those of the inter-drawing dimension developing unit 24 and automatic multi-view drawing medium-tolerance dimension shape generating unit 17 will now be described with reference to a flowchart shown in Fig. 6.

First, one view of the three-view drawing data stored in the storage unit 15 is fetched at step S-30. The single-view drawing data fetched from the storage unit 15 is checked at step S-31 to see if it contains all necessary data, e.g. original dimensions and medium tolerance dimensions. If not, the selected view drawing data is supplemented with omitted dimensional line data at step S-32 and the supplemented drawing data for the selected view is stored in the storage unit 15. At the step S-32, the inter-drawing dimension developing unit 24 make conversions on the basis that each single-view drawing of the originally entered three-view drawing data from Figs. 7A-7C has been created in the corresponding coordinate system shown in Fig. 7A-7C. For instance, a right-hand side view in Fig. 7C does not have any dimensional lines. Since this view is on a Y-Z surface, two dimensional lines concerned with a Y component are fetched from a top view showing an X-Z surface. In addition, two dimensional lines concerned with a Z component are fetched from a front view showing an X-Z surface. This allows the right-hand side view in Fig. 7C to be converted into a right-hand side view shown in Fig. 10C.

This operation is also performed for the front and top views in a similar manner and the three-view drawing data is finally converted to have the original dimension values and original-tolerance values, as shown in Figs. 10A-10C.

Then, the dimensional lines with original nominal values and tolerance values are fetched sequentially at step S-33 and converted into medium-tolerance dimensions at step S-35. This operation of fetching the dimensional lines with tolerances and converting into medium-tolerance dimensions is performed repeatedly until it is judged at step S-34 that there are no further dimensions with tolerances.

Finally, the medium-tolerance dimension shape of the single-view drawing is created at step S-36, and the created single-view drawing data is displayed at step S-37. The above steps S-30 to S-37 are executed repeatedly until it is judged, at step S-31, that there is no single-view drawing which requires the conversion into medium tolerances. The result of this operation is displayable in the manner illustrated in Figs. 11A-11C. The other operations will not be described herein because they are similar to those described in embodiment 1 with reference to Figs. 1 and 2.

It will be apparent that the invention, as described above, achieves a CAD unit which stores drawing data analysis results so that when a drawing having medium-tolerance dimensions is transformed again after having been entered, it is not necessary to analyze the drawing data again and processing can be performed at high speed.

In addition, the present invention achieves a CAD unit which displays a drawing so that areas remaining unchanged and having been changed may be identified at a glance, thereby ensuring ease of checking drawings.

Further, the present invention achieves a CAD unit which does not require excess dimensional lines to be pre-entered in generally created design drawings for a medium-tolerance transformation operation, thus considerably reducing the number of work processes required for the medium-tolerance transformation operation in creating drawings for mold die design.

The entire disclosure of each and every foreign patent application from which the benefit of foreign priority has been claimed in the present application is incorporated herein by reference, as if fully set forth.

Although this invention has been described in at least one preferred form with a certain degree of particularity, it is to be understood that the present disclosure of the preferred embodiments has been made only by way of example and that numerous changes in the details and arrangement of components may be made without departing from the spirit and scope of the invention as hereinafter claimed.

**Claims**

1. A CAD unit comprising:

   shape defining means (14) for defining a graphic form with data values, including nominal dimensions with tolerances;

   drawing analyzing means (19) for analyzing the data values of the graphic form defined by said shape defining means (14);

   storing means (15) for storing the data of the graphic form defined by the shape defining means (14) and the data analyzed by said drawing analyzing means (19); and

   automatic medium-tolerance dimension shape generating means (17) for calculating medium-tolerance dimensions from the nominal dimensions with tolerances in accordance with the data stored in said storing means (15).

2. The CAD unit of Claim 1, further comprising means (22, 23) for creating and displaying a new graphic form defined by using the dimensions, comprising medium tolerance values, obtained from said shape generating means.

3. A CAD unit defined in Claim 1, wherein the graphic form displayed distinguishingly displays those areas unchanged and those areas changed.

4. A CAD unit comprising:

   shape defining means (14) for defining a product shape according to at least a plural-view drawing including dimensions;

   storing means (15) for storing shape data and dimension data defined in said drawing;

   inter-drawing dimension developing means (24) for providing the dimensions of the drawing that were undefined beforehand in accordance with said stored drawing; and

   automatic medium-tolerance dimension shape generating means (17) for calculating medium-tolerance dimensions from the nominal dimensions with tolerances and creating a new drawing defined by using the dimensions including medium tolerance values obtained.

5. In a CAD unit, a method comprising:

   retrieving from storage nominal dimensional values and nominal tolerance values of a workpiece;

   automatically calculating from said nominal dimensional values and nominal tolerance values, corresponding medium tolerance values.

6. The method of Claim 5, wherein the dimensions of said workpiece are represented in storage by values for plural views and said retrieving and calculating step are conducted for plural views.

7. The method of Claim 5, wherein all dimensions with tolerances for said workpiece in a view are converted to medium-tolerance dimensions.

8. The method of Claim 5, further comprising the steps of:

   determining for at least one view, whether dimensional values for at least one line in said view is absent; and

   calculating from available dimensional values for all views, the absent value for said line in said at least one view.

9. The method of Claim 8, further comprising the step of:

   conducting said determining and calculating steps for plural views.

10. The method of Claim 9, further comprising the step of displaying a shape defined by dimensional values comprising at least said medium-tolerance dimensional values.

11. The method of Claim 6, further comprising displaying a view defined by dimensional values comprising at least said medium-tolerance dimensional values with the changed and unchanged areas of said view being identified with distinguishing characteristics.

12. The method of Claim 11, wherein the changed and unchanged areas are displayed in different colors.

Fig. 1

```
┌─────────────────────────┐
│                         │╱ 14
│   Shape defining unit   │
│                         │
└─────────────────────────┘
             │
             ▼
┌─────────────────────────┐
│                         │╱ 15
│      Storage unit       │
│                         │
└─────────────────────────┘
             │
             ▼
┌─────────────────────────┐
│                         │╱ 16
│  Shape selecting unit   │
│                         │
└─────────────────────────┘
             │
             ▼
┌─────────────────────────┐
│        Automatic        │╱ 17
│    medium-tolerance     │
│     dimension shape     │
│     generating unit     │
└─────────────────────────┘
```

Fig. 2

```
              ( START )
                  │
                  ▼ ◄──────────────────────────────────────────────┐
         ┌─────────────────┐  ─ S11                                │
         │  Dimensional line│                                       │
         │  data is fetched │                                       │
         └─────────────────┘                                        │
                  │                                                 │
                  ▼                                                 │
              ╱───────╲  ─ S12                                      │
        ╱ Is there any  ╲                                          │
      ╱ dimensional line  ╲                                        │
  NO  ╲ which has not      ╱                                        │
    │   ╲ been converted? ╱                                         │
    │      ╲───────╱                                                │
    │          │                                                    │
    │          ▼                                                    │
    │      ╱───────╲  ─ S13                                         │
    │    ╱ Is that a   ╲                                            │
    │  ╱ dimensional line ╲                                         │
    │  ╲ with tolerances? ╱   NO ───┐                               │
    │    ╲───────╱                  │                               │
    │          │                    │                               │
    │          ▼                    │                               │
    │  ┌─────────────────┐  ─ S15   │                               │
    │  │ Converted into  │          │                               │
    │  │ medium-tolerance│          │                               │
    │  │ dimension       │          │                               │
    │  └─────────────────┘          │                               │
    │          │                    ▼                               │
    │  ┌─────────────────┐  ─ S16   ┌──────────────────┐  ─ S14     │
    │  │ Register the    │          │ Register it as a │            │
    │  │ dimensional line│          │ dimensional line │            │
    │  │ which has been  │          │ which is not     │            │
    │  │ converted       │          │ required to be   │            │
    │  └─────────────────┘          │ converted        │            │
    │          │                    └──────────────────┘            │
    │          │                             │                      │
    │          └─────────────────────────────┴──────────────────────┘
    │          │
    └──────────┤
               ▼
      ┌─────────────────┐  ─ S17
      │ Fetch dimensional│
      │ line data which  │
      │ have been        │
      │ converted or which│
      │ are not required │
      │ to be converted  │
      └─────────────────┘
               │
               ▼
      ┌─────────────────┐  ─ S18
      │ Analysis of     │
      │ medium-tolerance│
      │ transformed     │
      │ shape           │
      └─────────────────┘
               │
               ▼
      ┌─────────────────┐  ─ S19
      │ Create medium-  │
      │ tolerance       │
      │ dimension shape │
      └─────────────────┘
               │
               ▼
      ┌─────────────────┐  ─ S20
      │ Display created │
      │ shape           │
      └─────────────────┘
               │
               ▼
            ( END )
```

9

Fig. 3

START                                        Fig. 4

**Figure 4 flowchart:**

START
↓
Already analyzed? — S21
- Analyzed →
- Not analyzed ↓

Drawing analysis — S22
↓
Storage of analysis results — S23
↓
Reading of analysis results — S24
↓
Changing of arbitrary dimensional line — S25
↓
Changing of dimensional lines with tolerances — S26
↓
Recalculation of drawing — S27
↓
Display of transformed graphic form — S28
↓
Display of recalculated graphic form — S29
↓
END

Fig. 5

Fig. 6

```
                              ┌─────────────┐
                              │    START    │
                              └─────────────┘
                                     │
                    ┌────────────────────────────┐   ⌐ S30
                    │     Data of one view       │
                    │        is fetched          │
                    └────────────────────────────┘
                                     │
           YES               ╱─────────────────╲        ⌐ S31
        ┌──────────────────<   All converted    >
        │                    ╲ data existing?   ╱
  ┌───────────┐               ╲───────────────╱
  │    END    │                     │ NO
  └───────────┘          ┌────────────────────────┐   ⌐ S32
                         │   Omitted dimensions    │
                         │    are fetched from     │
                         │       other views       │
                         │    Supplemented with    │
                         │   omitted dimensions    │
                         └────────────────────────┘
                                     │
                         ┌────────────────────────┐   ⌐ S33
                         │   Dimensional line      │
                         │    data is fetched      │
                         └────────────────────────┘
                                     │
                          ╱─────────────────────╲      ⌐ S34
                         ╱      Unconverted       ╲
                        <  dimensional line w/unconverted >
                         ╲   tolerance existing?  ╱
                          ╲─────────────────────╱
                                     │ YES
                         ┌────────────────────────┐   ⌐ S35
                         │     Converted into      │
                         │    medium-tolerance     │
                         │       dimension         │
                         └────────────────────────┘

                         ┌────────────────────────┐   ⌐ S36
                         │    Medium-tolerance     │
                         │    dimension shape      │
                         │      is created         │
                         └────────────────────────┘
                                     │
                         ┌────────────────────────┐   ⌐ S37
                         │    Created shape is     │
                         │       displayed         │
                         └────────────────────────┘
```

13

(Top view)

Fig. 7A

(Front view)

Fig. 7B

(Right-hand side view)

Fig. 7C

Fig. 8A

Fig. 8B

Fig. 8C

15

Fig. 9

Fig. 10A

Fig. 10B

Fig. 10C

Fig. 11A

Fig. 11B

Fig. 11C

Fig. 12

Fig. 13

```
                                    ┌─ ST-1
  ┌──────────────────────────┐  ⌐
  │                          │
  │     Input of product     │
  │      shape by CAD        │
  │       operation          │
  │                          │
  └──────────────────────────┘
               │
               ▼
                                    ┌─ ST-2
  ┌──────────────────────────┐  ⌐
  │                          │
  │  Manual calculation of   │
  │  medium tolerance values │
  │  (by engineer)           │
  │                          │
  └──────────────────────────┘
               │
               ▼
                                    ┌─ ST-3
  ┌──────────────────────────┐  ⌐
  │                          │
  │                          │
  │   Input of medium        │
  │   tolerance dimension    │
  │   shape by CAD operation  │
  │                          │
  │                          │
  └──────────────────────────┘
```

20

Fig. 14